# EUROPÄISCHE PATENTSCHRIFT

(11) **EP 2 016 010 B1**
(45) Veröffentlichungstag und Bekanntmachung des Hinweises auf die Patenterteilung: **24.02.2016**
(21) Anmeldenummer: 07725039.7
(22) Anmeldetag: 09.05.2007
(51) Int. Cl.: B65G 15/14, B65G 39/06

(54) **STEILBANDFÖRDERER FÜR LOSES SCHÜTTGUT**
STEEP ANGLE CONVEYOR FOR BULK MATERIAL
CONVOYEUR À BANDE INCLINÉE POUR PRODUITS EN VRAC

(30) Priorität: 11.05.2006 DE 202006007637 U
(43) Veröffentlichungstag der Anmeldung: 21.01.2009
(73) Patentinhaber: VHV Anlagenbau GmbH, 48477 Hörstel (DE)
(72) Erfinder: VERLAGE, Bernhard, 48477 Riesenbeck (DE)
(74) Vertreter: Bünemann, Egon
(86) Internationale Anmeldenummer: PCT/EP2007/004117
(87) Internationale Veröffentlichungsnummer: WO 2007/131690

(56) Entgegenhaltungen:
- EP-A- 0 498 671
- EP-A- 0 626 326
- DE-A1- 2 614 109
- DE-U1-202006 007 637
- FR-A1- 2 619 090
- GB-A- 2 008 527
- US-A- 3 762 534
- US-A- 4 936 441
- US-A1- 2001 052 450

## Beschreibung

### Steilbandförderer für loses Schüttgut

Die Erfindung betrifft einen Steilbandförderer für loses Schüttgut gemäß dem Oberbegriff des Anspruchs 1.

Bei bekannten Steilbandförderern (DE 34 29 940 C2, DE 297 17 996.9) wirken in einer Bandanlage zumindest ein das zu fördernde Schüttgut aufnehmender erster Fördergurt und ein diesem als Deckband zugeordneter zweiter Fördergurt zusammen. Mit diesem Steilbandförderer können nach dem Zusammenführen der Gurte in Förderrichtung unterschiedliche Neigungen überwunden werden, wobei ein ungewolltes Verrutschen des Schüttgutes zwischen den Gurten durch Pressung vermieden ist. In der Förderphase beim Zusammenführen der Gurte wird das auf dem ersten Fördergurt befindliche Schüttgut in eine bogenförmige Übergangszone geführt und hier mit dem bereits parallel laufenden Deckband abgedeckt (s. a. US 4,936,441; DE 26 14 109 A1; EP 0 626 326 A; EP 0 498 671 A).

In dieser Übergangszone werden die beiden gegenüberliegenden Trums der Gurte durch ober- bzw. unterseitige Andrückelemente zusammengepreßt, so daß das im wesentlichen mittig geförderte Schüttgut in einem randseitig dichten Aufnahmeraum gehalten ist, gegen seitlichen Austritt gesichert wird und nach Erreichen eines höher gelegenen Abgabeortes ausgefördert werden kann. Durch eine Vielzahl von Andrückelementen und damit einhergehende Gurtbelastungen durch mehrere Deformationszonen ist die Standzeit der Fördergurte bei bekannten Steilbandförderern nachteilig beeinflußt. In US 3,762,534 A ist in der Übergangszone eine einstückige Rolle mit konkav ausgeformtem Mittelteil vorgesehen, so daß sich hier ein muldenförmiger Teilbereich des Fördertrums anlegen kann. Ähnliche Rollen-Konstruktionen sind in GB 2 008 527 A und US 2001/052450 sowie FR 2 619 090 A1 gezeigt.

Die Erfindung befaßt sich mit dem Problem, einen Steilbandförderer für loses Schüttgut zu schaffen, dessen Bauteile im Bereich der Übergangszone mit geringem konstruktivem Aufwand eine vollständige Abdeckung von Schüttgütern variabler Konsistenz gewährleisten und dabei durch geringe Reib- und Deformationsbelastungen eine Erhöhung der Standzeit der Gurte möglich ist.

Die Erfindung löst diese Aufgabe mit einem Steilbandförderer mit den Merkmalen des Anspruchs 1. Hinsichtlich wesentlicher weiterer Ausgestaltungen wird auf die Ansprüche 2 bis 12 verwiesen.

Der Steilbandförderer ist im Bereich der Übergangszone mit lediglich einem Walzenkörper versehen, der als zentrales Element einer in ein Fördersystem integrierbaren Knickstation angeordnet ist, so daß mit vorteilhaft wenigen Bauteilen eine kompakte Funktionsbaugruppe erreicht ist. Dieser Walzenkörper ist in der Knickstation beim Aufnehmen des Schüttgutes nach Art einer Schließrolle wirksam, mit der insbesondere das im Querschnitt maulförmig umformbare Deckband randseitig auf den unter diesem zugeführten Fördergurt aufgepreßt wird.

Bei dieser Konzeption der Knickstation werden der beladene Trum des Fördergurtes und das oberhalb diesem zugeführte Trum des Deckbandes direkt auf dem Walzenkörper in Übereinanderlage verbracht, gespannt und gleichzeitig umgelenkt. In dieser Verbindungsphase wird das im mittleren Bereich der Gurte aufliegende Schüttgut ohne zusätzliche Andrückelemente gegen randseitigen Austritt gesichert und das ab dieser Phase mehrlagige Fördertrum kann bei seiner in Förderrichtung geneigten Weiterbewegung weitgehend beliebige Neigungs- und/oder Umlenkstellungen einnehmen.

Derartige den erfindungsgemäßen Walzenkörper aufweisende Knickstationen sind in kundenspezifisch variabler Konstruktion ausführbar, so daß Förder-Anlagen mit C-förmigen und/oder S-förmigen Gurtführungen möglich sind. Ebenso ist die Anwendung dieses Ein-Walzen-Systems für Vertikalkehren denkbar, bei denen eine Steilförderung mit mehr als 90°-Umlenkung vorgesehen ist.

Der Walzenkörper ist in Richtung seiner Längsmittelebene umfangsseitig mit mehreren eine belastungsoptimale Mitnahme des Fördertrums bewirkenden Auflagezonen ausgebildet, wobei zwischen zwei den randseitig dichten Preßverbund der beiden Gurte bewirkenden Auflagebereichen mit erfindungsgemäß einstellbaren Auflagezylindern eine mittlere Aufnahmezone für den Bereich des Schüttgut-Stranges vorgesehen ist. Diese Aufnahmezone ist variabel an das Schüttgut anpaßbar, so daß eine durch das strangförmig gepreßte Schüttgut bewirkte und eine radial vorstehende Wulst bildende Ausformung des umgelenkten Deckbandes in diese Aufnahmezone radial verlagerbar ist.

Ausgehend von der Bewegungsphase beim Zusammenführen und Übereinanderlegen der beiden Trums wird der dabei radial ausgeformte mittlere Teilbereich des Deckbandes über einen Bogenbereich des Walzenumfangs mitgeführt und der mittlere Wulst-Teil in Folge der Gurtspannung in die Aufnahmezone zwischen den beiden Auflagezylindern eingepreßt. Dabei wird durch ein in der Aufnahmezone dieser Baugruppe vorgesehenes Gegenglied in Form von Federelementen eine Gegenpressung am wulstförmigen Teilbereich erzeugt, derart, daß bei der Umlenkung der Gurte entstehende Geschwindigkeitsdifferenzen, bedingt durch den radialen Abstand von Fördergurt und Deckband, durch das Gegenglied ausgleichbar sind. Damit werden nachteilige Verschleißbelastungen, insbesondere durch sich reibende Oberflächenbereiche oder Walkbewegungen der Gurte, vermieden.

Mit dem - beispielsweise im Vergleich mit bekannten Andruckrollen (DE 297 17 996.9) - einen größeren Durchmesser aufweisenden Walzenkörper können bisher im Bereich der die Gurte zusammenführenden Übergangszone vorgesehene Andrückelemente, insbesondere in Form von mehreren Rollenstühlen o. dgl., effizient ersetzt werden und durch die vergleichsweise geringeren Preß- und Walkbelastungen ist eine vorteilhafte Erhöhung der Lebensdauer der Gurte erreicht.

Weitere Einzelheiten und vorteilhafte Ausgestaltungen ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Seitenansicht einer eine Übergangszone für zwei Gurte bildenden Knickstation eines Steilbandförderers, mit einem direkt als Umlenk- und Preßtrommel wirksamen Walzenkörper,
- Fig. 2: eine Draufsicht des Steilbandförderers im Bereich der Knickstation gemäß Fig. 1,
- Fig. 3: eine Vorderansicht des Steilbandförderers gemäß Fig. 1,
- Fig. 4: eine Perspektivdarstellung des Steilbandförderers im Bereich der Knickstation gemäß Fig. 1,
- Fig. 5: eine perspektivische Einzeldarstellung des Walzenkörpers der Knickstation gemäß Fig. 1,
- Fig. 6: eine Schnittdarstellung des Walzenkörpers gemäß Fig. 5,
- Fig. 7: eine teilweise geschnittene Darstellung des Walzenkörpers ähnlich Fig. 5 mit einer zweiten Ausführung der Halterung der Federelemente,
- Fig. 8: eine Darstellung des Walzenkörpers in der zweiten Ausführung ähnlich Fig. 6, und
- Fig. 9 bis Fig. 11: jeweilige Einzeldarstellungen wesentlicher Einzelteile der Halterung gemäß Fig. 7 und 8.

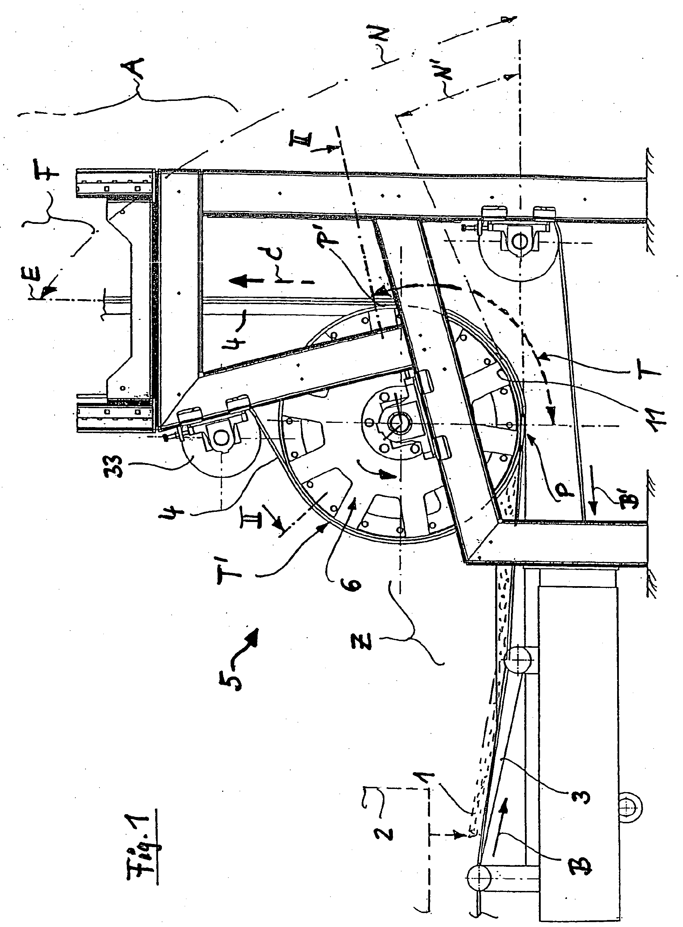

In Fig. 1 ist ein allgemein mit A bezeichneter Steilbandförderer dargestellt, mit dem in einem nicht näher dargestellten Fördersystem loses Schüttgut 1 in einem Aufgabebereich 2 auf einen ersten umlaufend angetriebenen Fördergurt 3 (Pfeilrichtung B, B') aufgegeben wird. Das im wesentlichen mittig auf diesen ersten Fördergurt 3 zugeführte Schüttgut 1 wird danach in der Förderrichtung B zu einer Übergangszone Z hin verlagert und hier mittels eines als Deckband zugeführten zweiten Fördergurtes 4 abgedeckt. In einem dieser bogenförmigen Übergangszone Z nachgeordneten steilen Teilbereich einer Förderstrecke F sind die beiden Gurte 3, 4 quer zur Laufebene E so gegeneinander gepreßt, daß das erfaßte Schüttgut 1 zwischen den beiden Gurten 3, 4 mitführbar ist.

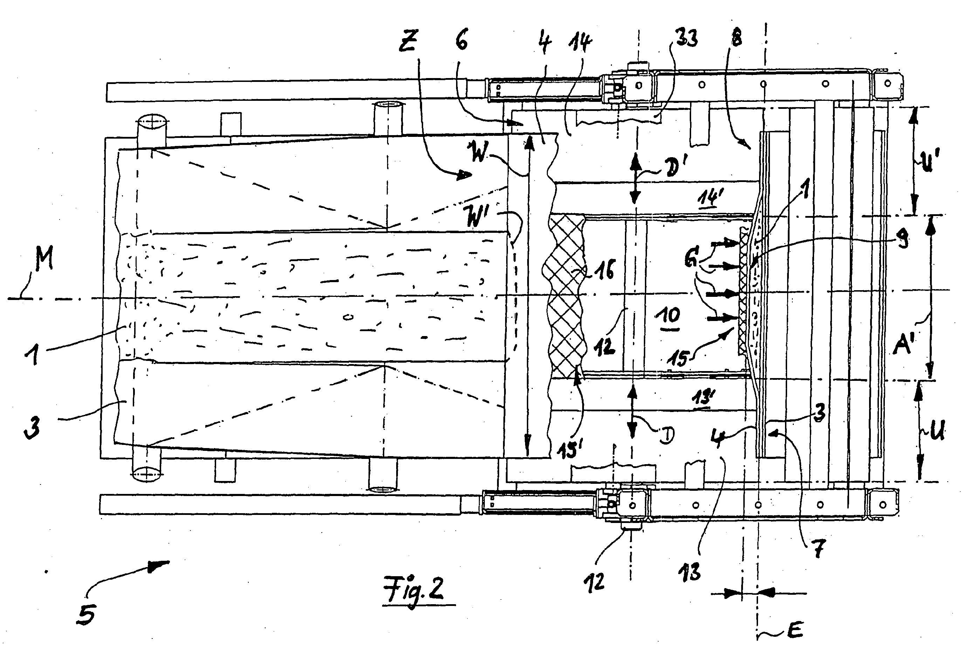

Erfindungsgemäß ist eine den an sich bekannten Preßvorgang der Gurte einleitende Knickstation 5 vorgesehen, in deren Übergangszone Z ein sowohl das beladene Trum des Fördergurtes 3 als auch das oberhalb diesem zugeführte Trum des Deckbandes 4 erfassender Walzenkörper 6 vorgesehen ist. Mittels dieses einen Walzenkörpers 6 sind die beiden Gurte 3, 4 in Übereinanderlage verbringbar, damit zumindest jeweilige Seitenrandbereiche 7, 8 (Fig. 2) in einer Schließstellung aufeinander aufpreßbar und das im mittleren Bereich der Gurte befindliche Schüttgut 1 so abdeckbar, daß der in dieser Förderphase gebildete Fördertrum T mehrlagig in Richtung der Förderstrecke F weiterbewegbar ist (Pfeil C). Diese Konstruktion mit dem nur einen Walzenkörper 6 zur Einleitung einer Steilförderung sieht vor, daß die beiden zugeführten Trums von Fördergurt 3 und Deckband 4 gleichzeitig spannbar und umlenkbar sind.

Es versteht sich, daß die Knickstation 4 mit dem Walzenkörper 6 auch im Bereich einer oberhalb des steilen Teilbereichs der Förderstrecke F befindlichen Übergabezone angeordnet sein kann und hier das Deckband 4 vom Fördergurt 3 abgehoben wird. Diese Fördersituation mit in umgekehrter Funktionslage zusammenwirkenden Bauteilen wird nachfolgend nicht näher beschrieben.

Auf das Spann- und Umlenkungsprinzip mittels des Walzenkörpers 6 sind die beiden Gurte 3, 4 so abgestimmt, daß zumindest einer der beiden zugeführten Trums durch eine radiale Ausformung einen Aufnahmeraum 9 (Fig. 2) für das Schüttgut 1 bilden kann, wobei hier die Bildung des Aufnahmeraumes 9 durch das Deckband 4 dargestellt ist. Denkbar ist dabei auch, daß durch eine entsprechende Zusatzbaugruppe (nicht dargestellt) der im Bereich des Fördertrums T außen liegenden Fördergurt 3 bereichsweise nach außen abgezogen wird und damit ein Aufnahmeraum durch entgegengesetzte radiale Verlagerung eines Teilbereiches des Fördergurtes 3 entsteht.

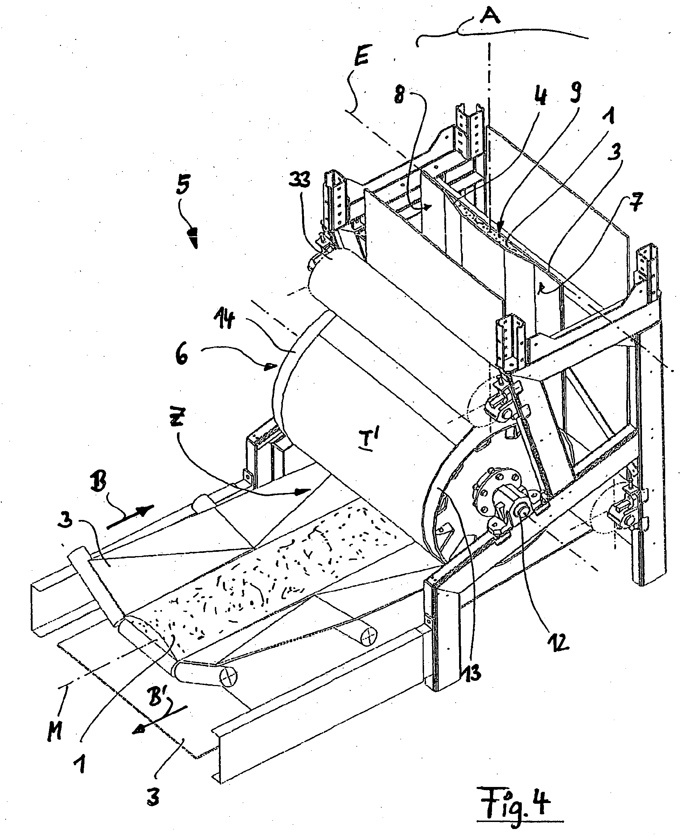

In der dargestellten Ausführung des Steilbandförderers A (Fig. 1 bis Fig. 4) wird deutlich, daß der Walzenkörper 6 in seinem in Längsrichtung mittleren Bereich beidseits der Mittelebene M eine Aufnahmezone 10 aufweist, in den ein durch das erfaßte Schüttgut 1 in der Übergangszone Z gebildeter und radial nach innen vorstehender Teilbereich des Deckbandes 4 einpreßbar ist (Fig. 2, Schnittdarstellung).

Mit dieser zweckmäßigen Ausführung der Knickstation 5 wird deutlich, daß die beiden in einem Verbindungsbereich P am Umfang des Walzenkörpers 6 zusammengeführten Trums der Gurte 3 und 4 in Förderrichtung C einen kreisbogenförmigen Mitnahmebereich 11 auf dem Walzenkörper 6 durchlaufen, dabei das innen liegende Trum des Deckbandes 4 mit dessen radialer Ausformung in die Aufnahmezone 10 des Walzenkörpers 6 verlagert ist und damit das randseitig geschlossene Fördertrum T in einer eine wahlweise Neigung (Winkel N, N'; Fig. 1) aufweisenden Förderrichtung C weiterbewegt werden kann.

Die Prinzipdarstellung gemäß Fig. 1 verdeutlicht, daß der Walzenkörper 6 ausgehend vom Bereich P bis zum Bereich P' des Fördertrums T in einer einen Viertelkreis bildenden Bogenkontur umfaßt ist, derart, daß dieser Mitnahmebereich 11 eine 90°-Umlenkung (Winkel N) des Fördertrums T bewirkt. Mit einem Winkel N' ist eine weitere denkbare Richtung der weitgehend beliebigen Umlenkungen im Bereich der Knickstation 5 angedeutet. Ebenso ist denkbar, eine über die 90°-Umlenkung hinaus gehende Förderrichtung nach Art einer sogenannten Vertikalkehre (nicht dargestellt) vorzusehen, womit deutlich wird, daß die Knickstation 5 auch an weitgehend beliebige Fördersysteme mit S- und/oder C-förmiger Umlenkung anpaßbar ist.

Die Zusammenschau von Fig. 2 bis 4 verdeutlicht, daß der Walzenkörper 6 in Richtung seiner Längsachse 12 zwei die Seitenbereiche 7, 8 des Deckbandes 4 bzw. des Fördertrums T untergreifende Auflagezylinder 13, 14 aufweist und in Richtung der Längsachse 12 zwischen diesen beiden Auflagezylindern 13, 14 ein die Aufnahmezone 10 definierender Freiraum vorgesehen ist, in dem die vorbeschriebene radiale Ausformung bzw. der Aufnahmeraum 9 des Fördertrums T einpreßbar ist. Dieser Aufnahmezone 10 ist in ihrer dem Abstand der Auflagezylinder 13, 14 entsprechenden Länge A' dadurch variabel, daß die beiden im wesentlichen gleiche Länge U, U' aufweisenden Auflagezylinder 13 und 14 in Richtung der Längsachse 12 verschiebbar bzw. einstellbar sind (Fig. 2; Pfeil D, D').

Die teilweise geschnittene Darstellung gemäß Fig. 2 verdeutlicht auch, daß der Walzenkörper 6 im Bereich der Aufnahmezone 10 mit zumindest einem diese zumindest bereichsweise abdeckenden und am Fördertrum T im Bereich der radialen Ausformung bzw. des Aufnahmeraumes 9 eine radiale Stützkraft G bewirkenden Gegenglied 15 versehen ist. In einer denkbaren Ausführung kann das Gegenglied 15' (Fig. 2, Ausschnitt, linke Seite) als ein die Aufnahmezone 10 in Längs- und Umfangsrichtung vollständig bedeckender und aus einem elastisch verformbaren Material bestehender Schlauchmantel 16 ausgebildet sein, der nicht Teil der Erfindung ist.

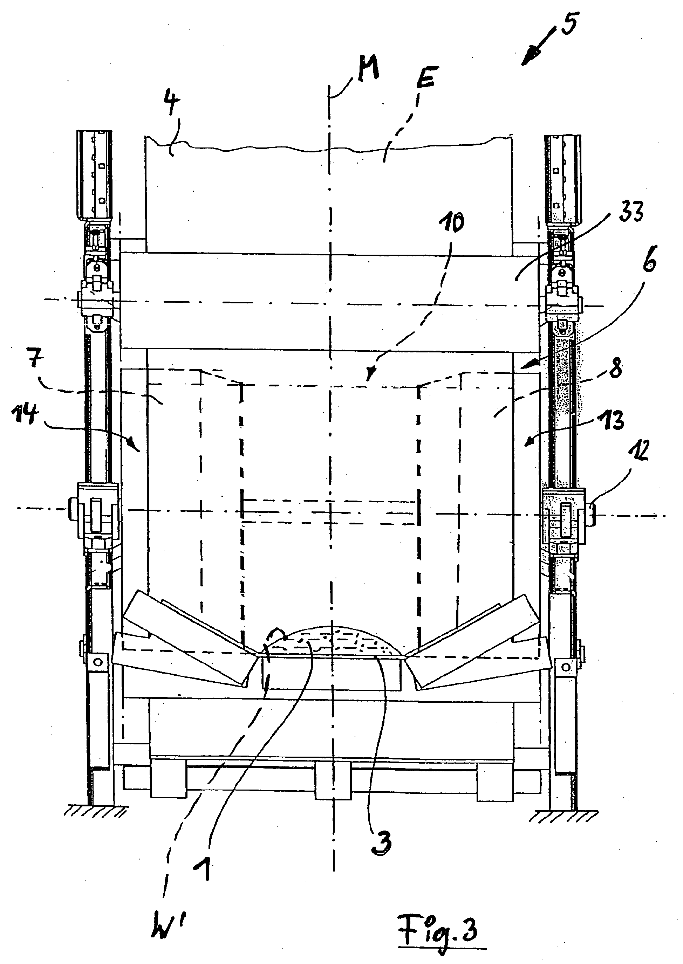

In einer am Walzenkörper 6 erfolgenden ersten Preßphase (Fig. 1, Trum T') liegt das eine Breite W (Fig. 2) aufweisende Deckband 4 nach der Führung an einer oberen Rolle 33 in einem bogenförmigen Zuführtrum T' bereits im Bereich der Aufnahmezone 10 auf und wird durch die Bandspannung des Systems auch radial belastet. Das Deckband 4 wird im Trum T' in einem sich umformenden Bereich (Strichlinie W', Fig. 2) auf das Gegenglied 15 gepreßt, so daß bereits vor dem Verbindungsbereich P eine maulartige Aufnahmekontur gebildet ist (Fig. 3) und der Aufnahmevorgang für das Schüttgut 1 optimal ausführbar ist.

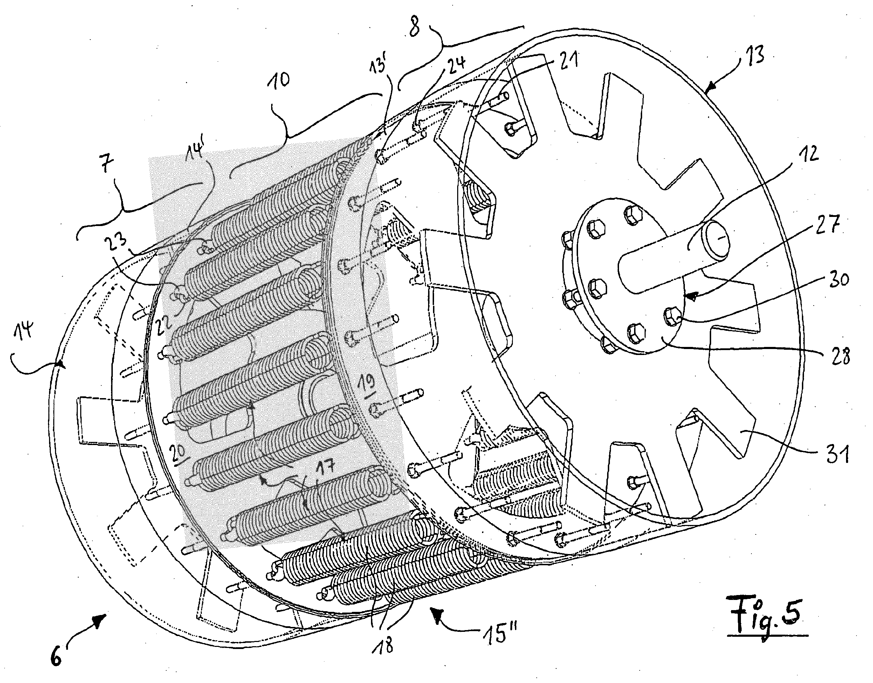

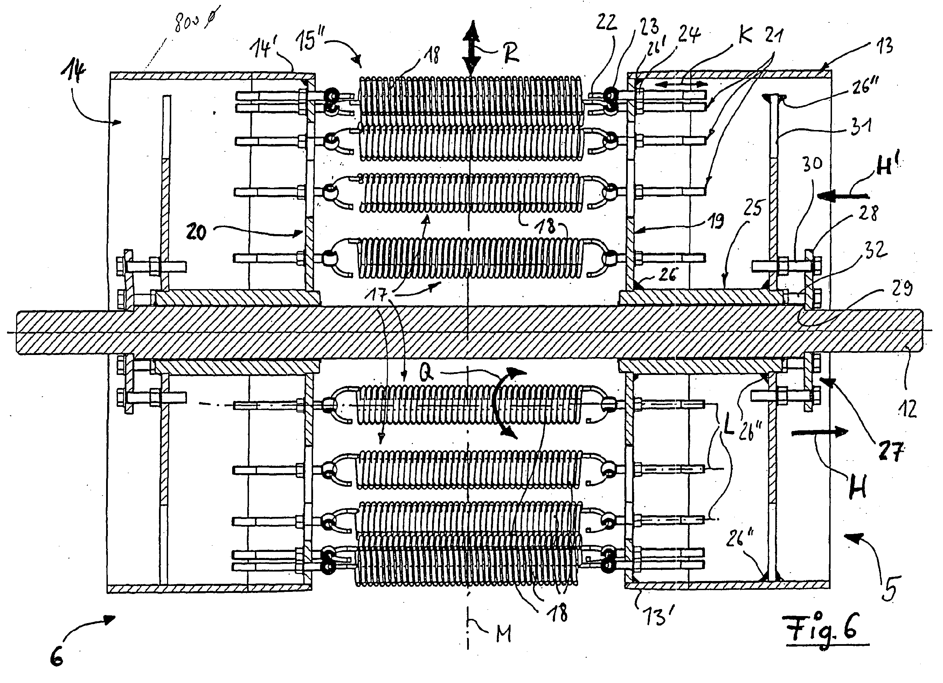

In Fig. 5 und 6 ist eine weitere Ausführungsform des Walzenkörpers 6 dargestellt, wobei dieser als Gegenglied 15" im Bereich der Aufnahmezone 10 mehrere sich zwischen den beiden Auflagezylindern 13 und 14 erstreckende Federelemente 17 aufweist. Diese Federelemente 17 sind in zweckmäßiger Ausführung als Schraubenfedern 18 ausgebildet, die im Bereich der Auflagezylinder 13, 14 an einer jeweiligen mit diesen verbundenen und sich radial zur Längsachse 12 hin erstreckenden Stützscheibe 19, 20 gehalten sind. Da der Walzenkörper 6 im wesentlichen spiegelbildlich zur Längsmittelebene M aufgebaut ist, ergibt sich die entsprechende Anordnung der Bauteile aus den Zeichnungen, ohne diese jeweils im Einzelnen zu beschreiben.

Die Schraubenfedern 18 sind dabei mittels jeweiliger die Stützscheibe 19, 20 durchgreifender Stellschrauben 21 gehalten. Die Verbindungshaken 22 der Schraubenfedern 18 greifen dabei in jeweilige Ringösen 23 der Stellschrauben 21 so ein, daß die Schraubenfedern 18 auch in vorgespannter Einbaulage schwenkbeweglich sind (Pfeil Q). Bei der vorbeschriebenen Auflage des den Aufnahmeraum 9 bildenden Deckbandes 4 können die Federn 18 sowohl in radialer Richtung (Pfeil R) in die vorbeschriebene Aufnahmezone 10 verlagert als auch entsprechend dem Bewegungspfeil Q um ihre Längsmittelachse L geschwenkt werden. In dieser Preßphase des Deckbandes 4 wird gleichzeitig die entsprechend der Federkennlinie wirksame Gegenkraft G erzeugt und nachteilig hohe Geschwindigkeitsdifferenzen der beiden unterschiedliche Durchmesser auf dem Walzenkörper aufweisenden Gurte 3 und 4 sind damit vermieden. Im Vergleich der Durchmesser des Walzenkörpers 6 und bekannten Umlenkrollen mit wesentlich kleinerem Durchmesser ist die geringere Geschwindigkeitsdifferenz der Gurte auf dem Walzenkörper 6 ermittelbar, so daß diese wesentlich geringere Reibbelastungen aufweist.

Die Festlegung der Schraubenfedern 18 mittels der Stellschrauben 21 ist so ausgeführt, daß mittels jeweiliger Einstellungen von Spannmuttern 24 die axiale Vorspannung jeder der Schraubenfedern 18 individuell bemessen werden kann (Pfeil K). Damit ist dieses Gegendrucksystem G auf das Volumen und die Konsistenz des Schüttgutes 1 und die damit geformte Größe des Aufnahmeraumes 9 abstimmbar.

Diese im Bereich der Stützscheibe 19, 20 gehaltenen Schraubenfedern 18 wirken mit einer die Längsachse 12 umgreifenden Stützhülse 25 dadurch zusammen, daß die außenseitig am Auflagezylinder 13, 14 fixierte Stützscheibe 19 innenseitig mit der Stützhülse 25, beispielsweise mittels einer Schweißverbindung bei 26, verbunden ist. An ihrem außenseitigen Ende ist die Stützhülse 25 mit einer insgesamt mit 27 bezeichneten Halterung versehen. Mit dieser Halterung 27 ist eine komplette Spann-Verstellung sämtlicher der Schraubenfedern 18 als Bausatz möglich.

Dazu weist die Halterung 27 eine Halteplatte 28 auf, die an einem Halteansatz 29 der Längsachse 12 anliegt und über Stellschrauben 30 mit einer sowohl am Auflagezylinder 13, 14 als auch an der Stützhülse 25 fixierten äußeren Stellscheibe 31 zusammenwirkt. Durch entsprechende Schubbelastung (Pfeil H') der Stützhülse 25, beispielsweise durch eine der Stellschrauben 30 bzw. 32, werden die Schraubenfedern 18 in Richtung der Mittellängsebene M entspannt. Durch eine umgekehrte Zugbewegung (Pfeil H) wird die Vorspannung der Schraubenfedern 18 erhöht.

Der vorbeschriebene Steilbandförderer A ist im Bereich der Knickstation 5 so ausgebildet, daß nach Art eines Doppelgurt-Senkrechtförderers eine effiziente Umlenkung der Fördergurte 3, 4 aus der Horizontalen in die Senkrechte möglich ist und diese Umlenkung auch aus der Senkrechten in die Horizontale erfolgen kann (nicht dargestellt). Das Schüttgut 1 wird zwischen den beiden Fördergurten 3, 4 kraftschlüssig nach oben transportiert, wobei die Seitenrandbereiche 7, 8 als jeweilige Dichtflächen wirksam werden. Der als eine Knick- und Umlenktrommel wirksame Walzenkörper 6 ermöglicht eine schonende Umlenkung des Schüttgutes 1, wobei dessen ungewollte Verlagerung in die Randbereiche 7, 8 auch im ansteigenden Bereich F sicher vermieden ist.

Bei einem Prototypen des Walzenkörpers 6 sind die beiden nach Art von axial verschiebbaren Trommelmänteln angeordneten Auflagezylinder 13, 14 mit einem Durchmesser von 800 mm ausgeführt. Die im Ausgangszustand in der Auflagezone 10 mit gleichem Durchmesser verlaufenden und als radiale Kompensatoren wirksamen Federelemente 17 wurden im Bereich des mit Schüttgut 1 beladenen Fördertrums T bis auf einen Durchmesser von ca. 600 mm radial nach innen gedrückt. Dabei sind die beiden Auflagezylinder 13 und 14 in der Förderphase als in Richtung der Längsachse 12 feststehende Baugruppen angeordnet und nur durch Nutzung der Elastizität im Bereich der Federelemente 15, 15', 15" wird bereits eine gurtschonende Umlenkung erreicht.

Denkbar ist auch, die beiden Auflagezylinder 13, 14 permanent axial verschieblich (Pfeil D, D', Fig. 22) auf der Längsachse 12 anzuordnen und beispielsweise mittels des nicht Teil der Erfindung anzusehenden elastisch verformbaren Schlauchmantels 16 zu verbinden. Damit können wechselnde Volumen des Schüttgutes 1 oder darin enthaltene Festkörper durch variable Verschiebung der Zylinder 13 und/oder 14 ausgeglichen werden.

In jedem Fall wird das Schüttgut 1 in der Umlenkungsphase (Fördertrum T) in Bezug auf die beiden Gurtoberflächen nur einmal bewegt, wobei durch scharfkantige oder großvolumige Materialstücke bedingte Beschädigungen an den Fördergurten 3, 4 durch die vorbeschriebene elastische Kompensation vermieden sind. Das Schüttgut 1 bzw. darin enthaltene Einschlüsse können in Richtung der als Freiraum wirksamen Aufnahmezone 10 bzw. gegen das elastische Gegenglied 15, 15', 15" ausweichen und gleichzeitig wird durch dieses Gegenglied der als Deckband 4 vorgesehene Fördergurt so unterstützt, daß dessen Laufeigenschaften nicht beeinträchtigt sind.

Denkbar ist in diesem Zusammenhang auch, die den Freiraum aufweisende Aufnahmezone 10 durch ein nicht zur Erfindung gehörendes, starres Gegenglied zu begrenzen (nicht dargestellt), wobei jedoch für dieses eine zusätzliche separate Lagerung im Bereich der Längsachse 12 notwendig ist. Im Übergangsbereich zwischen den beiden Auflagezylindern 13 und 14 können zur Auflagezone 10 hin scharfkantige Bereiche mit die Fördergurte nachteilig belastender Kerbwirkung entstehen.

In den dargestellten Ausführungen des Walzenkörpers 6 sind an den beiden Auflagezylindern 13, 14 jeweilige Führungsprofile 13' und 14' mit zur Mittellängsebene M gerichteter Neigung vorgesehen, so daß in diesem Preßbereich eine gleichmäßige und kantenfreie Führung der Wulst-Zone des Deckbandes 4 erreicht ist.

Das in zweckmäßiger Ausführung realisierte Konzept mit dem elastischen Kompensator 15, 15', 15" bewirkt im Bereich der Aufnahmezone 10 einen Ausgleich zwischen den beiden durchmesserabhängig unterschiedlichen Umfangsgeschwindigkeiten der Gurte 3 und 4, da das elastische Gegenglied 15, 15', 15" eine radiale Relativbewegung des Deckbandes 4 gegenüber dem mit unveränderter Kontur umlaufenden ersten Fördergurt 3 ausgleichen kann. Nach dem Ablaufen des Fördertrums T von der Umfangsfläche des Walzenkörpers 6 (im Bereich P', Fig. 1) gelangen die Gegenglieder 15, 15', 15" selbsttätig wieder in ihre ursprüngliche Ausgangsstellung zurück und untergreifen bei sich drehendem Walzenkörper 6 den Trum T'.

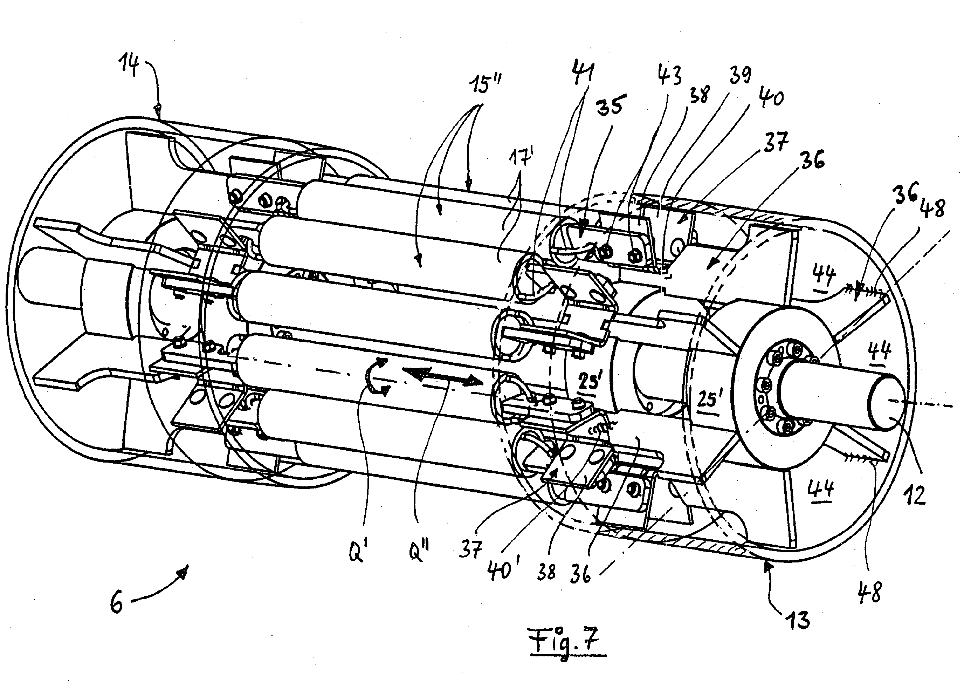

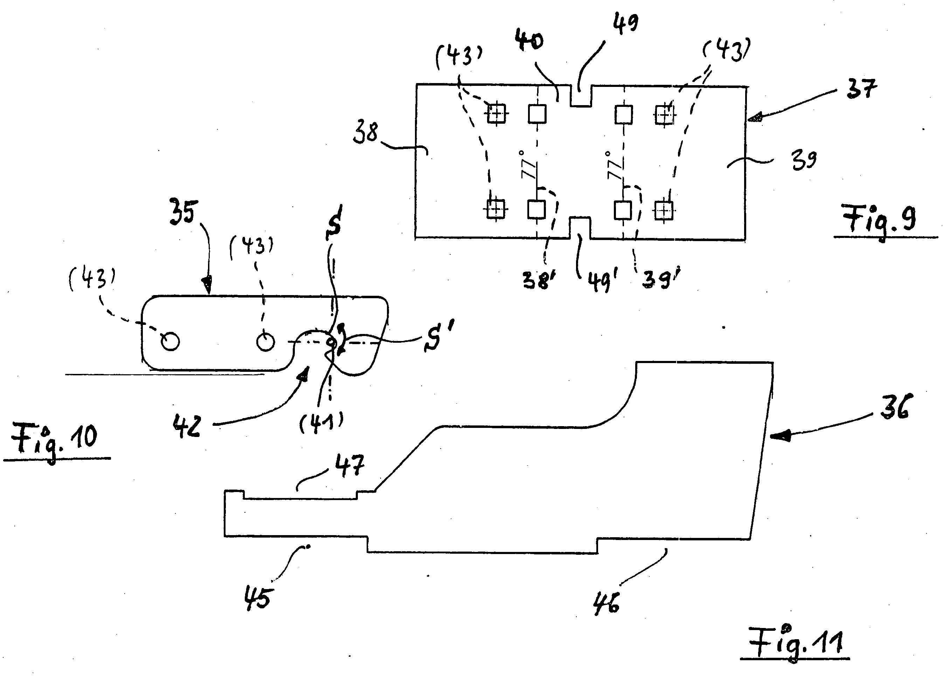

In Fig. 7 bis 11 sind weitere Varianten des Walzenkörpers 6 bzw. dessen Einzelteile dargestellt, wobei eine zweite Ausführungsform von Halterungen der als Gegenglieder 15" vorgesehenen Federelemente 17' vorgesehen ist. An Stelle der in Fig. 5 und 6 gezeigten Stützscheiben 19, 20 als Halterung erfolgt die Verbindung der über den Umfang der Aufnahmezone 10 verteilten Federelemente 17' zu einer zweiteiligen Stützhülse 25' hin (die ihrerseits auf der Längsachse 12 gehalten ist) nunmehr mittels der in Fig. 9 bis 11 dargestellten Einzelteile.

Die spiegelbildlich zur Mittelebene M gehaltenen Federelemente 17' sind dabei endseitig jeweils mit zumindest einen Traghaken 35 (Fig. 10) aufweisenden und nach Art von Speichen über den zylindrischen Innenraum der Auflagezylinder 13, 14 verteilten Halteplatten 36 verbunden. Denkbar ist auch, die Kontur der Halteplatte 36 mit einem hakenförmigen Ansatz zu versehen, so daß eine einteilige "Speichen"-Konstruktion erreicht ist (nicht dargestellt) und an dieser die Federelemente 17' direkt angreifen.

In der dargestellten Ausführung sind die Halteplatten 36 mit einem zusätzlichen, im Querschnitt U-förmigen Zwischenteil 37 versehen, wobei an dessen jeweiligen freien Schenkeln 38, 39 einer der Traghaken 35 gehalten ist. Ein Basisschenkel 40 des U-förmigen Zwischenteils 37 ist insbesondere über eine Schweißverbindung bei 40' (Fig. 7) mit der Halteplatte 36 verbunden. In Fig. 9 ist das Zwischenteil 37 als plattenförmiges Ausgangsteil dargestellt, dessen Schenkel 38, 39 im Bereich von Biegelinien 38', 39' zu der in Einbaulage vorgesehenen U-Form (Fig. 7) umgebogen werden.

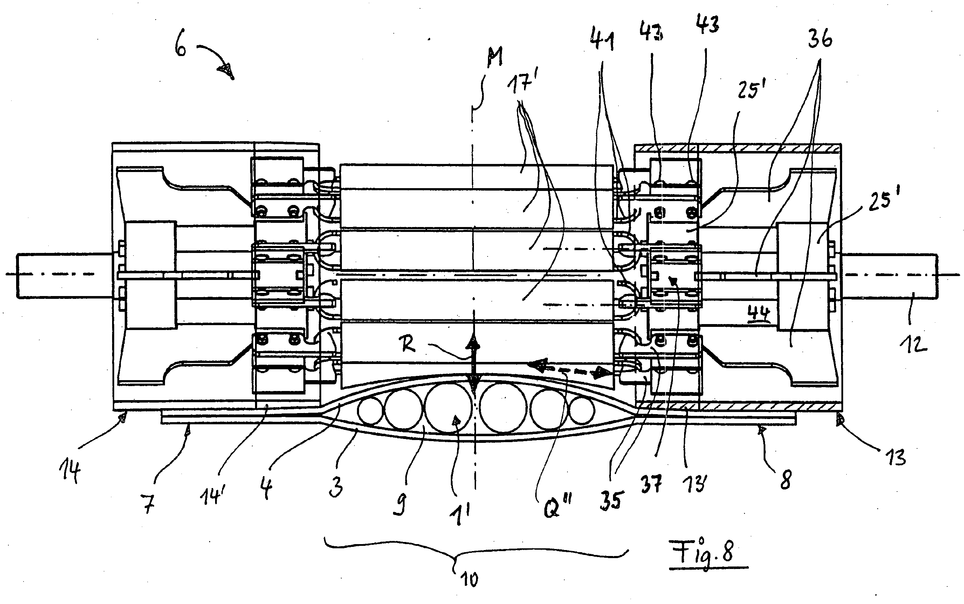

Bei dieser dreiteiligen Baueinheit 35, 36, 37 weist der jeweilige Traghaken 35 eine das in Form einer Öse o. dgl. ausgebildete Gegenglied 41 (Fig. 7) des Federelementes 17' aufnehmende Aufnahmekontur 42 (Fig. 10) auf. Mit dieser Kontur ist der Verbindungsaufbau so optimiert, daß in Arbeitsstellung des Walzenkörpers 6 (Fig. 8) eine endseitige Bewegung der Federelemente 17' bei Einwirkung der Preß- bzw. Zugkraft (Pfeil R, Q, Q") reibungsarm in die Stützkonstruktion des Walzenkörpers 6 einleitbar ist.

Die vergrößerte Einzeldarstellung des Traghakens 35 gemäß Fig. 10 verdeutlicht, daß mit der Aufnahmekontur 42 eine insbesondere für eine Rollbewegung (Pfeil S') des Gegengliedes 41 geeignete Stützbahn S vorgegeben wird und damit in diesem hochbelasteten Bereich ein schneller Verschleiß, beispielsweise durch punktuelle Gleitreibung, vermieden werden kann. In zweckmäßiger Ausführung ist der Traghaken 35 zusätzlich aus einem besonders verschleißfesten Material gefertigt. Zur Halterung der Traghaken 35 im Bereich der jeweiligen U-Schenkel 38, 39 des Zwischenteils 37 sind vorteilhaft Schraubverbindungen 43 vorgesehen, so daß mit geringem Aufwand ein Austausch der Traghaken 35 bzw. der Federelemente 17' möglich ist.

Diese einfache Montage und Demontage im Bereich der Federelemente 17' wird noch dadurch begünstigt, daß durch die "Speichen"-Konstruktion jeweilige Freiräume 44 in Längsrichtung des Walzenkörpers 6 gebildet sind und damit die insbesondere lösbar gehaltenen Einzelteile einfach erreichbar sind. In zweckmäßiger Ausführung ist die Halteplatte 36 mit den beiden Stützhülsen 25' jeweils im Bereich von Profilausnehmungen 45, 46 (Fig. 11) verschweißt und die Schweißverbindung 40' zum Anlageprofile 49, 49' aufweisenden Zwischenteil 37 hin ist im Bereich einer Formausnehmung 47 vorgesehen. Zu den Auflagezylindern 13 bzw. 14 hin sind die Halteplatten 36 ebenfalls durch Schweißverbindungen 48 festgelegt (Fig. 7).

Die vorbeschriebene "Speichen"-Konstruktion ist durch entsprechende Dimensionierung der Einzelteile 35, 36, 37 an unterschiedliche Durchmesser bzw. Längen der Walzenkörper 6 bzw. variierende Federelemente 17' anpaßbar. Ebenso ist denkbar, im Bereich der Halteplatten 36 bzw. des am Zwischenteil 37 gehaltenen Traghakens 35 eine radial und/oder axial einstellbare Abstützung (nicht dargestellt) der Federelemente 17'vorzusehen.

## Patentansprüche

1. Steilbandförderer für loses Schüttgut (1), mit einem ersten Fördergurt (3) und einem diesen als Deckband zugeordneten zweiten Fördergurt (4), wobei das im wesentlichen mittig auf den ersten Fördergurt (3) zugeführte Schüttgut (1) im Bereich einer in Förderrichtung (B) bogenförmigen Übergangszone (Z) zwischen den beiden Gurten (3, 4) aufnehmbar ist und zum Mitführen des Schüttgutes (1) in einem nachgeordneten steilen Teilbereich einer Förderstrecke (F) die beiden Gurte (3, 4) quer zur Laufebene (E) gegeneinander gepresst sind, in der Übergangszone (Z) ein sowohl das beladene Trum des Fördergurtes (3) als auch das oberhalb diesem zugeführte Trum des Deckbandes (4) erfassender Walzenkörper (6) vorgesehen ist, wobei zumindest einer der beiden zugeführten Trums der Gurte (3, 4) durch eine radiale Ausformung einen Aufnahmeraum (9) für das Schüttgut (1) bildet, der Walzenkörper (6) eine Aufnahmezone (10) aufweist, in die ein durch das erfasste Schüttgut (1) radial nach innen vorstehender Teilbereich des Deckbandes (4) verlagerbar ist, der Walzenkörper (6) in Richtung seiner Längsachse (12) zwei zur Abstützung der beiden Randbereiche des Fördertrums (T) vorgesehene Auflagezylinder (13, 14) aufweist, diese die radiale Ausformung des Fördertrums (T) aufnehmende Aufnahmezone (10) definieren und der Walzenkörper (6) im Bereich der Aufnahmezone (10) mit zumindest einem diese zumindest bereichsweise abdeckenden und zumindest am mehrlagigen Fördertrum (T) im Bereich der radialen Ausformung eine radiale Stützkraft (G) bewirkenden Gegenglied (15) versehen ist, **dadurch gekennzeichnet, dass** der Walzenkörper (6) als Gegenglied (15") im Bereich der Aufnahmezone (10) mehrere sich zwischen den beiden Auflagezylindern (13, 14) erstreckende Federelemente (17, 17') aufweist.

2. Steilbandförderer nach Anspruch 1, **dadurch gekennzeichnet, dass** der Walzenkörper (6) eine durch in Richtung der Längsachse (12) verlagerbare Auflagezylinder (13, 14) einstellbare Aufnahmezone (10) aufweist (Pfeil D, D').

3. Steilbandförderer nach Anspruch 1 oder 2, **dadurch gekennzeichnet, dass** die als Schraubenfedern (18) ausgebildeten Federelemente (17) im Bereich der Auflagezylinder (13, 14) an jeweiligen mit diesen verbundenen und als Stützscheibe (19, 20) ausgebildeten Haltern angreift.

4. Steilbandförderer nach Anspruch 3, **dadurch gekennzeichnet, dass** die Schraubenfedern (18) mittels jeweiliger die Stützscheibe (19, 20) durchgreifender Stellschrauben (21) gehalten und bei Auflage des Deckbandes (4) schwenkbeweglich (Pfeil Q) sind.

5. Steilbandförderer nach Anspruch 3 oder 4, **dadurch gekennzeichnet, dass** die Schraubenfedern (18) durch Stellschrauben (21, 30, 32) in Längsrichtung (Pfeil H, H') spannbar sind.

6. Steilbandförderer nach einem der Ansprüche 3 bis 5, **dadurch gekennzeichnet, dass** die Stützscheibe (19, 20) der Schraubenfedern (18) mit einer die Längsachse (12) umgreifenden Stützhülse (25) zusammenwirkt, die ihrerseits eine zur Spannung (Pfeil H, H') der Schraubenfedern (18) vorgesehene Halterung (27) aufweist.

7. Steilbandförderer nach Anspruch 6, **dadurch gekennzeichnet, dass** die Halterung (27) mit einer mehrere radial versetzte Stellschrauben (30) aufweisenden und an einem Halteansatz (29) der Längsachse (12) anliegenden Halteplatte (28) versehen ist, die mit einer an der verschieblichen Stützhülse (25) gehaltenen Stellscheibe (31) zusammenwirkt.

8. Steilbandförderer nach einem der Ansprüche 3 bis 7, **dadurch gekennzeichnet, dass** die als Gegenglieder (15") vorgesehenen Federelemente (17') endseitig jeweils mit zumindest einen Traghaken (35) aufweisenden und nach Art von Speichen über dem Innenraum der Auflagezylinder (13, 14) verteilten Halteplatten (36) verbunden sind.

9. Steilbandförderer nach Anspruch 8, **dadurch gekennzeichnet, dass** jeweils zwei der Traghaken (35) über ein im Querschnitt U-förmiges Zwischenteil (37) mit jeweils einer der Halteplatten (36) verbunden sind.

10. Steilbandförderer nach Anspruch 8 oder 9, **dadurch gekennzeichnet, dass** der Traghaken (35) eine das in Form einer Öse o. dgl. ausgebildete Gegenglied (41) des Federelementes (17') aufnehmende Aufnahmekontur (42) aufweist, derart, dass in Arbeitsstellung des Walzenkörpers (6) die endseitige Bewegung (Pfeil Q', Q") der Federelemente (17') reibungsarm aufnehmbar ist.

11. Steilbandförderer nach Anspruch 10, **dadurch gekennzeichnet, dass** mit der Aufnahmekontur (42) eine für eine Rollbewegung des Gegengliedes (41) geeignete Stützbahn (S) vorgebbar ist.

12. Steilbandförderer nach einem der Ansprüche 3 bis 11, **dadurch gekennzeichnet, dass** im Bereich der Halteplatten (36) eine axial und/oder radial einstellbare Abstützung der Federelemente (17') gebildet ist.

## Claims

1. Steep angle belt conveyor for loose bulk material (1), comprising a first conveyor belt (3) and a second conveyor belt (4) assigned to said first conveyor belt as a cover band, the bulk material (1), which is fed through in a substantially centred manner on the first conveyor belt (3), can be received between the two belts (3, 4) in the region of a transition zone (Z) that is curved in the conveying direction (B), and the two belts (3, 4) being pressed against one another transversely to the running plane (E) in order to transport the bulk material (1) in a steep downstream portion of a conveying path (F), a roll body (6) being provided in the transition zone (Z), which roll body grasps both the loaded side of the conveyor belt (3) and the side of the cover band (4) which is fed above said conveyor belt, at least one of the two sides of the belts (3, 4) that are fed through forming a receiving chamber (9) for the bulk material (1) by means of a radial shaping, the roll body (6) comprising a receiving zone (10) into which a portion of the cover band (4) that projects radially inwards through the grasped bulk material (1) can be moved, the roll body (6) having two support cylinders (13, 14), provided along the longitudinal axle (12) thereof, for supporting the two edge regions of the conveying side (T), said support cylinders defining the receiving zone (10) which receives the radial shaping of the conveying side (T), and the roll body (6) being provided in the region of the receiving zone (10) with at least one counter member (15) which covers at least portions of said receiving zone and which produces a radial supporting force (G) in the region of the radial shaping at least on the multi-layered conveying side (T), **characterised in that** the roll body (6) comprises a plurality of spring elements (17, 17') extending between the two support cylinders (13, 14), in the region of the receiving zone (10), as the counter member (15").

2. Steep angle belt conveyor according to claim 1, **characterised in that** the roll body (6) comprises a receiving zone (10) that can be adjusted by means of support cylinders (13, 14) which are movable along the longitudinal axle (12) (arrow D, D').

3. Steep angle belt conveyor according to either claim 1 or claim 2, **characterised in that** the spring elements (17), formed as helical springs (18), act in the region of the support cylinders (13, 14) on respective holders that are connected to said support cylinders and are formed as support rings (19, 20).

4. Steep angle belt conveyor according to claim 3, **characterised in that** the helical springs (18) are held by respective adjusting screws (21) passing through the support ring (19, 20) and are pivotably movable (arrow Q) when the cover band (4) is being placed on.

5. Steep angle belt conveyor according to either claim 3 or claim 4, **characterised in that** the helical springs (18) can be tensioned by adjusting screws (21, 30, 32) in the longitudinal direction (arrow H, H').

6. Steep angle belt conveyor according to any of claims 3 to 5, **characterised in that** the support ring (19, 20) of the helical springs (18) cooperates with a support sleeve (25) which surrounds the longitudinal axle (12) and in turn comprises a mounting (27) which is provided for tensioning (arrow H, H') the helical springs (18).

7. Steep angle belt conveyor according to claim 6, **characterised in that** the mounting (27) is provided with a retaining plate (28) having a plurality of radially offset adjusting screws (30) and resting on a retaining lug (29) of the longitudinal axle (12), which retaining plate cooperates with an adjusting disc (31) held on the movable support sleeve (25).

8. Steep angle belt conveyor according to any of claims 3 to 7, **characterised in that** the spring elements (17') provided as counter members (15") are each connected at the end thereof to retaining plates (36) which comprise at least one carrying hook (35) and are distributed over the interior of the support cylinder (13, 14) in the manner of spokes.

9. Steep angle belt conveyor according to claim 8, **characterised in that** in each case two of the carrying hooks (35) are connected to one of the retaining plates (36) respectively via an intermediate (37) part that is U-shaped in cross section.

10. Steep angle belt conveyor according to either claim 8 or claim 9, **characterised in that** the carrying hook (35) comprises a receiving profile (42) which receives the counter member (41), formed as a loop or similar, of the spring element (17') in such a way that, in the operating position of the roll body (6), the movement (arrow Q', Q") at the end of the spring element (17') can be absorbed in a low-friction manner.

11. Steep angle belt conveyor according to claim 10, **characterised in that** a support path (S), which is suitable for a rolling movement of the counter member (41), can be predetermined by means of the receiving profile (42).

12. Steep angle belt conveyor according to any of claims 3 to 11, **characterised in that** an axially and/or radially adjustable support of the spring element (17') is formed in the region of the retaining plates (36).

## Revendications

1. Convoyeur à bande inclinée pour matières en vrac (1), comprenant une première bande transporteuse (3) et une deuxième bande transporteuse (4) associée à celle-ci comme bande de recouvrement, dans laquelle les matières en vrac (1) acheminées substantiellement au centre sur la première bande transporteuse (3) peuvent être reçues entre les deux bandes (3, 4) au niveau d'une zone de transition (Z) en forme d'arc dans le sens de transport (B), et pour entraîner les matières en vrac (1), dans une section inclinée d'une voie de transport (F), située en aval, les deux bandes (3, 4) sont pressées l'une contre l'autre transversalement au plan de déplacement (E), un corps de cylindre (6) est prévu dans la zone de transition (Z) qui saisit à la fois le brin de la bande transporteuse (3) et le brin de la bande de recouvrement (4) acheminé au-dessus de celui-ci, dans laquelle au moins l'un des deux brins acheminés des bandes (3, 4) constitue un espace de réception (9) pour les matières en vrac (1) au moyen d'une partie formée radiale, le corps de cylindre (6) présente une zone de réception (10) dans laquelle une section de la bande de recouvrement (4) faisant saillie radialement vers l'intérieur à travers les matières en vrac saisies peut être déplacée, le corps de cylindre (6) présente dans le sens de son axe longitudinal (12) deux cylindres d'appui (13, 14) prévus pour l'appui des deux zones marginales du brin transporteur (T), lesdits cylindres définissant la zone de réception (10) recevant la partie formée radiale du brin transporteur (T), et au niveau de la zone de réception (10), le corps de cylindre (6) est muni d'au moins un élément opposé (15) qui recouvre au moins localement ladite zone et provoque une force d'appui radiale (G) au moins sur le brin transporteur (T) multicouche au niveau de la partie formée radiale, **caractérisé en ce que** le corps de cylindre (6) présente comme élément opposé (15") au niveau de la zone de réception (10) plusieurs éléments faisant ressort (17, 17') qui s'étendent entre les deux cylindres d'appui (13, 14).

2. Convoyeur à bande inclinée selon la revendication 1, **caractérisé en ce que** le corps de cylindre (6) présente une zone de réception (10) réglable par des cylindres d'appui (13) qui peuvent être déplacés dans le sens de l'axe longitudinal (12) (flèches D, D').

3. Convoyeur à bande inclinée selon la revendication 1 ou 2, **caractérisé en ce que** les éléments faisant ressort (17), réalisés sous forme de ressorts hélicoïdaux (18), sont appliqués au niveau des cylindres d'appui (13, 14) à des fixations respectives reliées à ceux-ci et réalisés sous forme de rondelle de support (19, 20).

4. Convoyeur à bande inclinée selon la revendication 3, **caractérisé en ce que** les ressorts hélicoïdaux (18) sont retenus au moyen de vis de réglage (21) respectives traversant la rondelle de support (19, 20) et sont pivotants (flèche Q) lorsque la bande de recouvrement (4) est mise en place.

5. Convoyeur à bande inclinée selon la revendication 3 ou 4, **caractérisé en ce que** les ressorts hélicoïdaux (18) peuvent être tendus dans le sens longitudinal (flèches H, H') par des vis de réglage (21, 30, 32).

6. Convoyeur à bande inclinée selon l'une quelconque des revendications précédentes 3 à 5, **caractérisé en ce que** la rondelle de support (19, 20) des ressorts hélicoïdaux (18) coopère avec une douille de support (25) entourant l'axe longitudinal et présentant à son tour une fixation (27) prévue pour tendre (flèches H, H') les ressorts hélicoïdaux (18).

7. Convoyeur à bande inclinée selon la revendication 6, **caractérisé en ce que** la fixation (27) est munie d'une plaque d'arrêt (28) présentant plusieurs vis de réglage (30) décalées radialement et appliquée contre une patte d'arrêt (29) de l'axe longitudinal (12), ladite plaque coopérant avec une rondelle de réglage (31) retenue contre la douille de support (25) mobile.

8. Convoyeur à bande inclinée selon l'une quelconque des revendications 3 à 7, **caractérisé en ce que** les éléments faisant ressort (17') prévus comme éléments opposés (15") sont reliés à des plaques d'arrêt (38) présentant du côté extrémité respectivement au moins un crochet de transport (35) et étant distribuées à la manière de rayons à l'intérieur des cylindres d'appui (13, 14).

9. Convoyeur à bande inclinée selon la revendication 8, **caractérisé en ce que** respectivement deux des crochets de transport (35) sont reliés à l'une des plaques d'arrêt (36) respectivement par une pièce intermédiaire (37) à section transversale en forme de U.

10. Convoyeur à bande inclinée selon la revendication 8 ou 9, **caractérisé en ce que** le crochet de transport (35) présente un contour de réception (42) recevant l'élément opposé (41), réalisé sous forme d'oeillet ou similaires, de l'élément faisant ressort (17') de telle sorte que dans une position de travail du corps de cylindre (6) le mouvement côté extrémité (flèches Q', Q") des éléments faisant ressort (17') peut être reçu avec peu de frottement.

11. Convoyeur à bande inclinée selon la revendication 10, **caractérisé en ce que** le contour de réception (42) permet de spécifier une trajectoire de support (S) adaptée à un mouvement de roulis de l'élément opposé (41).

12. Convoyeur à bande inclinée selon l'une quelconque des revendications 3 à 11, **caractérisé en ce qu'**au niveau des plaques d'arrêt (36) est formé un support des éléments faisant ressort (17'), réglable axialement et/ou radialement.
